Europäisches Patentamt

(19) European Patent Office

Office européen des brevets

(11) Publication number: **0 167 399**
**A2**

(12) **EUROPEAN PATENT APPLICATION**

(21) Application number: **85304774.4**

(22) Date of filing: **04.07.85**

(51) Int. Cl.⁴: **A 23 F 3/36**
**A 23 F 3/08**

(30) Priority: **06.07.84 US 628539**

(43) Date of publication of application:
**08.01.86 Bulletin 86/2**

(84) Designated Contracting States:
**DE GB**

(71) Applicant: **GENERAL FOODS CORPORATION**
**250 North Street** -
**White Plains, N.Y. 10625(US)**

(72) Inventor: **Vitzthum, Otto Georg**
**Upper Borg 170**
**D-2800 Bremen(DE)**

(72) Inventor: **Clausi, Adolph Scott**
**Azelea Terrace**
**Cos Cob Connecticut 06807(US)**

(72) Inventor: **El-Hag, Nabil Ahmed**
**RD No. 5 Box 179 Crescent Lane**
**Putnam Valley, N.Y. 10579(US)**

(72) Inventor: **Kapoor, Virendra Nath**
**6, North Bridge Place RFD No. 1**
**Mount Kisco, N.Y. 10549(US)**

(74) Representative: **Baillie, Iain Cameron et al,**
**c/o Ladas & Parry Isartorplatz 5**
**D-8000 München 2(DE)**

(54) Decaffeination of fermented unfired tea.

(57) Fermented, but unfired, green tea leaf material is contacted with a decaffeination fluid in order to effect removal of caffeine from the tea. After this decaffeination step, which preferably takes place in the absence of oxygen, the tea leaf material is fired in order to develop a black tea flavor. The preferred decaffeination fluid is a supercritical fluid with carbon dioxide being the preferred supercritical fluid. The product produced is superior to product obtained by decaffeinating green, unfermented tea or black tea.

EP 0 167 399 A2

3341

## DESCRIPTION

DECAFFEINATION OF FERMENTED,
UNFIRED TEA

TECHNICAL FIELD

Several methods are known for the production of decaffeinated tea leaves. It is significant, however, that only a few manufacturers offer caffeine-free tea and that these products are not well-regarded by the consumer. The prime reason for the unacceptability of these commercial products is that the decaffeinated teas possess poor quality aroma and flavor. In an effort to raise the quality of decaffeinated tea products efforts have been made to remove aromatic substances from the tea prior to decaffeination and to add back these aromatics to the tea after the decaffeination step.

For example, a process for the manufacture of caffeine-free black tea is described in U.S. Patent No. 4,167,589 which is hereby incorporated by reference. According to the patent, the aromatic content of black tea is extracted with a dry supercritical gas, such as carbon dioxide; thereafter, the caffeine content is extracted with a moist supercritical gas; and finally, the decaffeinated black tea is reimpregnated with the extracted aromatic content.

0167399

- 2 -

In a similar method (German Patent No. 196,835), the aromatic substances were first removed from the tea by means of petroleum ether. The tea was then moistened, ammonia was conducted through it to crack the caffeine-complex salts, and the caffeine was subsequently extracted with solvents. After drying the tea, the aromatic substances which were initially removed with the petroleum ether were added back to the tea.

In yet another method (French Patent No. 791,055), the aromatic substances are extracted by means of a solvent having a low boiling point, such as dichlorethylene, the extraction of the caffeine being accomplished by a solvent having a higher boiling point, such as carbon tetrachloride, after a treatment with an alcoholic ammonia solution. In another variation of the method, the aromatic substances and the caffeine are removed from the tea at the same time by a solvent mixture and, after fractionating the extract, the aromatic substances are reincorporated into the tea.

It has however not proven possible to remove aromatic tea constituents from caffeinated tea and to add these aromatics back to a decaffeinated tea without significantly altering the quality of tea aroma and flavor. Additionally the steps of separately extracting, holding and adding back aromatics will entail a significant expenditure of funds in terms of both increased capital and operating costs. There is, therefore, a need to develop an economical process for the production of a quality decaffeinated tea product.

Conventional tea manufacturing processes include a series of steps which have been and are used in the tea growing regions of the world. The classical process includes some or all of the following steps: (1) plucking of the green leaf in the field; (2) withering of the plucked leaves, usually by drying overnight; (3) rolling the withered leaves in order to rupture at least a portion of the cellular structure of the tea material and to liberate tea enzymes and/or tea materials on which the enzymes act; (4) comminuting the rolled leaves by various crushing, tearing, curling and/or cutting steps; (5) fermenting the comminuted tea leaf material by holding for one or more hours in a moist environment which develops, desirable flavor precursors (e.g., brisk, fruity) and a copper red color; and finally, (6) firing (i.e., low temperature roasting) the fermented tea at a temperature of about 70°-110°C for from about 10 to 35 minutes in order to fully develop tea flavor. Heretofore the decaffeination of tea has been conducted on black (i.e., fermented and fired) tea much to the detriment of the fully developed tea flavor.

DISCLOSURE OF THE INVENTION

It has now been discovered that higher quality decaffeinated black tea can be produced by performing the decaffeination step after the comminuted tea leaf material has been fermented, but before the fermented tea has been fired. The process of this invention produces better quality decaffeinated black tea than is obtained either by decaffeinating black tea or by decaffeinating green, unfermented tea.

The process of this invention can be carried out using any of the decaffeinating fluids well-known to the tea and coffee arts. Thus, methylene chloride, trichloroethylene, other food-acceptable, halogenated

- 4 -

hydrocarbon solvents, ethyl acetate and supercritical gases may be employed. The preferred decaffeinating fluid is moist supercritical carbon dioxide at a temperature of from 40° to 100°C and at a pressure of from about 100 to 400 atmospheres absolute.

The tea material should contain a moisture content of about 30 to 60% by weight in order to facilitate decaffeination. Preferably the decaffeinating fluid will be water-saturated prior to contacting the tea so that little, if any, drying of the tea occurs during the decaffeination step.

It has been found that the decaffeination process of this invention is best conducted in an environment of having a low (e.g., below 5%) oxygen content and preferably in the absence of oxygen. The addition of an antioxidant to the decaffeination system may also lead to improved quality effects in the decaffeinated tea. The antioxidant could be incorporated in the tea prior to decaffeination such as soon after the fermentation step. Addition of an antioxidant to the decaffeination fluid would also be possible.

This invention may be utilized to produce teas having any desired degree of decaffeination. Typically the tea will be at least 50% decaffeinated. Decaffeination in excess of 90% or 95% by weight may be readily achieved by means of this invention.

This invention is further illustrated but not limited by the following Examples.

### EXAMPLE 1

Green tea leaves were withered, rolled and cut into fragments of about two millimeter size by being passed through a series of stainless steel serrated rolls, the well-known CTC (crushing - tearing - curling) processing sequence. One portion of these cut tea leaves was directly decaffeinated (as in Example 2) and another portion of those leaves were fermented, producing the desired copper red color, prior to decaffeination. Fermentation was conducted for between 1 to 2 hours at a humidity in excess of 95% while subjecting the tea material to a gentle stream of 20° to 30°C air.

The fermented tea leaf material which had a moisture content of about 58% by weight was decaffeinated in two separate runs. In each run 1500 grams of fermented tea was put in a pressure vessel, the vessel was evacuated and water-saturated supercritical carbon dixoide was circulated through the vessel in a continuous process wherein the $CO_2$ extracts caffeine from the tea and transports the caffeine to a caffeine adsorber which in both cases was a bed of activated carbon. Such a caffeine adsorption step is more fully described in U.S. Patent No. 4,260,639 to Zosel which is hereby incorporated by reference. Comparable adsorption could be effected with a bed of strongly acidic cation exchange resin as described in French Patent No. 2,361,824 which is also hereby incorporated by reference. Operating at 75°C and 250 bars caffeine was reduced from an initial 2.8% (dry weight basis) to 0.053%, a 98% reduction, after 2 hours. Operating at 60°C under 180 bars caffeine content was reduced from 2.8% to 0.02%, a 99% reduction after 5 hours. In both cases the decaffeinated tea was then fired and the resulting black tea (3.6% moisture by weight) was steeped in hot water to produce a superior quality decaffeinated tea beverage.

### EXAMPLE 2

The unfermented tea leaves were in a similar manner to Example 1 extracted in an evacuated vessel using supercritical carbon dioxide at a temperature of 60°C and 280 bars. After 13 hours 96% by weight of the caffeine had been removed. This decaffeinated tea material was then fermented and fired resulting in a black, decaffeinated tea which, when steeped in hot water produced a tea beverage having some brisk quality but being noticeably inferior to the tea beverage obtained in Example 1.

Having thus described the invention what is claimed is:

CLAIMS

1. A method for the manufacture of decaffeinated tea comprising the steps of:

(a) drying green tea leaves;

(b) rolling, cutting and fermenting the green tea, said fermentation being conducted in a moist atmosphere for a period of time in excess of 30 minutes and effective to develop a red-brown color and a fermented tea flavor in said tea;

(c) decaffeinating the fermented and unfired tea by contacting said fermented tea with a decaffeinating fluid for a time and in an amount which is effective to remove at least 50% by weight of the caffeine contained in the tea.

2. The decaffeinated fermented, unfired tea produced according to the process of claim 1.

3. A method for producing a decaffeinated black tea comprising the further step of firing the decaffeinated, fermented, unfired tea of claim 1, said firing being conducted at a temperature above 70°C for a period of time in excess of about 10 minutes and effective to develop a black tea flavor.

4. The decaffeinated black tea produced according to the process of claim 3.

5. The method of claim 1 wherein the decaffeinating fluid is a moist extraction solvent gas having selective dissolving capacity for the caffeine and which is supercritical with respect to temperature and pressure.

6. The method of claim 5 wherein the gas is carbon dioxide.

7. The method of claim 6 wherein decaffeination is carried out at a temperature of from about 40° to 100°C at a pressure of from about 100 to 400 atmospheres absolute.

8. The method of claim 1 wherein the decaffeinating fluid is a halogenated hydrocarbon.

9. The method of claim 8 wherein the decaffeinating fluid is methylene chloride.

10. The method of claim 1 wherein decaffeination is conducted in a sealed chamber from which oxygen is removed prior to commencement of contact between fermented tea and the decaffeinating fluid.

11. The method of claim 1 wherein the decaffeinating system contains an antioxidant.